(19) Europäisches Patentamt
European Patent Office
Office européen des brevets

(11) Veröffentlichungsnummer : **0 042 820**
**B1**

(12) # EUROPÄISCHE PATENTSCHRIFT

(45) Veröffentlichungstag der Patentschrift : **05.06.85**

(51) Int. Cl.[4] : **C 08 G 69/26**, C 08 G 69/28

(21) Anmeldenummer : **81810250.1**

(22) Anmeldetag : **17.06.81**

(54) **Transparente Copolyamide und deren Verwendung zur Herstellung von Formkörpern.**

(30) Priorität : **23.06.80 CH 4806/80**

(43) Veröffentlichungstag der Anmeldung : **30.12.81 Patentblatt 81/52**

(45) Bekanntmachung des Hinweises auf die Patenterteilung : **05.06.85 Patentblatt 85/23**

(84) Benannte Vertragsstaaten : **CH DE FR GB IT LI NL**

(56) Entgegenhaltungen :
**EP-A- 0 010 521**
**GB-A- 1 410 007**
**US-A- 3 173 898**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Postfach**
**CH-4002 Basel (CH)**

(72) Erfinder : **Pfeifer, Josef, Dr.**
**Brunnmattstrasse 32**
**CH-4106 Therwil (CH)**
Erfinder : **Reinehr, Dieter, Dr.**
**Wolfsheule 10**
**D-7842 Kandern (DE)**

**EP 0 042 820 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue transparente Copolyamide und deren Verwendung zur Herstellung von Formkörpern.

Transparente Copolyamide aus 3-Aminomethyl-3,5,5-trimethylcyclohexylamin (Isophorondiamin), weiteren Diaminen und aromatischen Dicarbonsäuren sind bekannt. So beschreibt zum Beispiel die GB-PS 1 410 006 Copolyamide aus Isophorondiamin, Polymethylendiamin mit 11 bis 14 C-Atomen und Terephthalsäure. In der GB-PS 1 255 483 sind weitere transparente Copolyamide aus Isophorondiamin, einem verzweigten aliphatischen Diamin mit 7 bis 12 C-Atomen in der Hauptkette und Dicarbonsäuren, wie Terephthalsäure, Isophthalsäure oder Gemische davon, beschrieben. In der EP-A1-0 010 521 sind ferner transparente Copolyamide aus einem 4,4'-Diaminodicyclohexylalkan, einem langkettigen, verzweigten aliphatischen Diamin mit 11 C-Atomen in der Hauptkette und Dicarbonsäuren, wie Terephthalsäure, Isophthalsäure bzw. Gemischen oder amidbildenden Derivaten davon, beschrieben.

Es besteht weiterhin ein Bedarf an transparenten Copolyamiden mit verbesserten Eigenschaften. Es wurden nun neue transparente Copolyamide aus aromatischer Dicarbonsäure, Isophorondiamin und langkettigen, verzweigten aliphatischen Diaminen gefunden.

Gegenstand der vorliegenden Erfindung ist daher ein transparentes Copolyamid mit einer reduzierten spezifischen Viskosität von mindestens 0,5 dl/g, gemessen an einer 0,5 %-igen Lösung in m-Kresol bei 25 °C, erhältlich durch Umsetzung eines Gemisches aus einem Diamin der Formel I

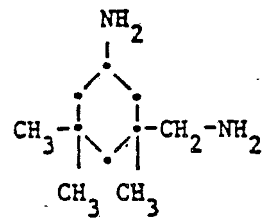

(I)

und Isophthalsäure oder Terephthalsäure bzw. Gemischen oder amidbildenden Derivaten davon entweder mit einem Gemisch B) aus einem aliphatischen Diamin der Formel II

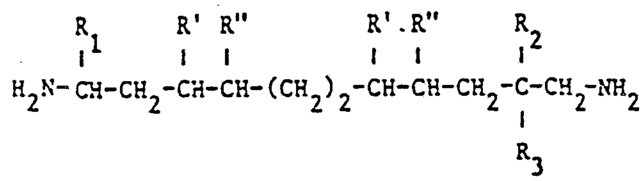

(II)

und Terephthalsäure bzw. einem amidbildenden Derivat davon oder einem Gemisch von Terephthalsäure und Isophthalsäure bzw. amidbildenden Derivaten davon in einem Molverhältnis Terephthalsäure (derivat) : Isophthalsäure(derivat) von 8 : 2 bis 10 : 0 oder mit einem Gemisch C) aus einem aliphatischen Diamin der Formel III

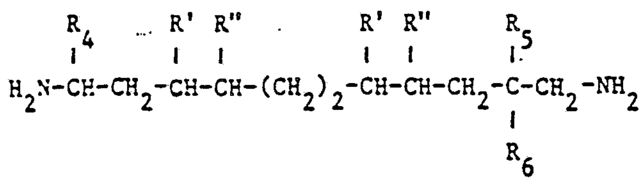

(III)

und Terephthalsäure oder Isophthalsäure bzw. Gemischen oder amidbildenden Derivaten davon erhalten werden, wobei

R' und R" unabhängig voneinander Wasserstoff oder Methyl,
$R_1$ Alkyl mit 2-12 C-Atomen oder gegebenenfalls substituiertes Aryl,
$R_2$ Alkyl mit 1-8 C-Atomen,
$R_3$ Wasserstoff oder Alkyl mit 1-5 C-Atomen,
$R_4$ gegebenenfalls durch $C_{1-4}$-Alkyl substituiertes Cycloalkyl mit 5-12 Ring-C-Atomen,
$R_5$ Wasserstoff oder Methyl und
$R_6$ Methyl oder
$R_5$ und $R_6$ zusammen Alkylen mit 4-11 C-Atomen bedeuten, wobei der Anteil an Gemisch C) 60-80 Gewichtsprozent und der Anteil an Gemisch B) 50-80 Gewichtsprozent, bezogen auf das Gesamtgewicht der Reaktionskomponenten, betragen und sich diese Gewichtsprozente bei amidbildenden Derivaten der Iso- oder Terephthalsäure auf gleiche funktionelle Gruppen beziehen.

Die erfindungsgemässen Copolyamide haben ein glasklares Aussehen und hohe Glasumwandlungstemperaturen und dementsprechend hohe Wärmeformbeständigkeit, lassen sich aber trotzdem sehr gut thermoplastisch verarbeiten, z. B. nach dem Spritzguss- oder Extrusionsverfahren. Sie zeichnen sich ferner durch geringere Wasseraufnahme, gute Hydrolysebeständigkeit, Beständigkeit gegen kochendes

Wasser und geringe Beeinflussung der mechanischen und elektrischen Eigenschaften unter Feuchtigkeitseinwirkung aus.

Durch $R_1$, $R_2$ und $R_3$ dargestellte Alkylgruppen oder Alkylsubstituenten an Cycloalkylgruppen $R_4$ können geradkettig oder verzweigt sein. Beispiele derartiger Alkylgruppen sind : die Methyl-, Aethyl-, n-Propyl-, Isopropyl-, n-, sek- und tert-Butyl-, n-Pentyl-, 2- oder 3-Pentyl-, n-Hexyl-, 2- oder 3-Heptyl-, n-Octyl-, n-Decyl- oder n-Dodecylgruppe, wobei $R_1$ jedoch nicht Methyl bedeuten kann.

Stellt $R_1$ substituiertes Aryl dar, so kommen als Substituenten insbesondere Alkylgruppen mit 1-4 C-Atomen und insbesondere 1 oder 2 C-Atomen in Betracht. Arylgruppen $R_1$ können mehrere Alkylgruppen tragen, sind aber bevorzugt nur durch eine Alkylgruppe substituiert. Besonders bevorzugt sind die 1- oder 2-Naphthylgruppe, durch eine Alkylgruppe mit 1-4 und vor allem 1 oder 2 C-Atomen substituiertes Phenyl und ganz besonders unsubstituiertes Phenyl.

Bedeutet $R_1$ eine definitionsgemässe Alkylgruppe, so handelt es sich vor allem um geradkettiges Alkyl mit 2-6 C-Atomen oder um Reste —CH($R_7$) ($R_8$), worin $R_7$ Alkyl mit 1-4 und $R_8$ Alkyl mit 1-6 C-Atomen darstellen. Die genannten Alkylgruppen $R_7$ und $R_8$ sind bevorzugt geradkettig und stellen vor allem Methyl, Aethyl, n-Propyl oder n-Butyl dar.

Durch $R_5$ und $R_6$ gebildete Alkylengruppen sind mit Vorteil geradkettig und weisen bevorzugt 4-7 C-Atome auf. Insbesondere handelt es sich dabei um die Tetramethylen-, die Heptamethylen- und ganz besonders um die Pentamethylengruppe.

Alkylgruppen $R_2$ und $R_3$ sind mit Vorteil geradkettig und weisen 1-6 bzw. 1-4 C-Atome auf. Besonders bevorzugt stellen $R_2$ und $R_3$ unabhängig voneinander Methyl, Aethyl, n-Propyl oder n-Butyl dar.

Sind Cycloalkylgruppen $R_4$ durch Alkylgruppen substituiert, so handelt es sich dabei vor allem um durch eine Methyl- oder Aethylgruppe substituiertes Cycloalkyl. Bevorzugt sind Cycloalkylgruppen $R_4$ jedoch unsubstituiert und weisen 5-8 Ring-C-Atome auf. Besonders bevorzugt stellt $R_4$ die Cyclopentyl- und vor allem die Cyclohexylgruppe dar. Bevorzugt sind erfindungsgemässe Copolyamide, die durch Umsetzung eines Gemisches A) mit einem Gemisch B) oder C) erhältlich sind, wobei die Gemische A), B) und C) aus stöchiometrischen Mengen des Diamins und der Dicarbonsäure bzw. amidbildenden Derivaten davon bestehen.

Besonders bevorzugt sind erfindungsgemässe Copolyamide, die durch Umsetzung eines Gemisches A) mit einem Gemisch B) aus im wesentlichen stöchiometrischen Mengen eines Diamins der Formel II und Terephthalsäure bzw. einem amidbildenden Derivat davon erhältlich sind, wobei R′ und R″ je Wasserstoff, $R_1$ Phenyl, geradkettiges Alkyl mit 1-6 C-Atomen oder —CH($R_7$) ($R_8$), $R_2$ und $R_8$ unabhängig voneinander Alkyl mit 1-6 C-Atomen und $R_3$ und $R_7$ unabhängig voneinander Alkyl mit 1-4 C-Atomen bedeuten und der Anteil an Gemisch B) 50-75 Gewichtsprozent, bezogen auf das Gesamtgewicht der Reaktionskomponenten, beträgt, besonders Copolyamide der oben erwähnten Art, worin R′ und R″ je Wasserstoff, $R_1$ —CH($R_7$) ($R_8$) und $R_2$ und $R_8$ bzw. $R_3$ und $R_7$ je Methyl, Aethyl, n-Propyl oder n-Butyl bedeuten und der Anteil an Gemisch B) 55-75 Gewichtsprozent, bezogen auf das Gesamtgewicht der Reaktionskomponenten, beträgt. Ganz besonders bevorzugt sind Copolyamide der oben erwähnten Art, worin $R_1$ —CH($R_7$) ($R_8$) und $R_2$, $R_3$, $R_7$ und $R_8$ je Methyl bedeuten und der Anteil an Gemisch B) 70 Gewichtsprozent beträgt.

Weitere bevorzugte Copolyamide sind solche, die durch Umsetzen eines Gemisches A) aus im wesentlichen stöchiometrischen Mengen eines Diamins der Formel I und Terephthalsäure bzw. einem amidbildenden Derivat davon mit einem Gemisch C) aus im wesentlichen stöchiometrischen Mengen eines Diamins der Formel III und Terephthalsäure bzw. einem amidbildenden Derivat davon erhalten werden, worin R′ und R″ je Wasserstoff, $R_4$ Cycloalkyl mit 5-8 Ring-C-Atomen und $R_5$ und $R_6$ je Methyl oder zusammen Alkylen mit 4-7 C-Atomen bedeuten und der Anteil an Gemisch C), bezogen auf das Gesamtgewicht der Reaktionskomponenten, 65-75 Gewichtsprozent beträgt, vor allem Copolyamide der genannten Art, worin R′ und R″ je H, $R_4$ Cyclopentyl und $R_5$ und $R_6$ zusammen Tetramethylen oder $R_4$ Cyclohexyl und $R_5$ und $R_6$ zusammen Pentamethylen bedeuten und der Anteil an Gemisch C), bezogen auf das Gesamtgewicht der Reaktionskomponenten, 65-75 Gewichtsprozent beträgt.

Besonders bevorzugt sind Copolyamide, die durch Umsetzen eines Gemisches A) aus im wesentlichen stöchiometrischen Mengen eines Diamins der Formel I und Terephthalsäure oder einem amidbildenden Derivat davon mit einem Gemisch B) aus im wesentlichen stöchiometrischen Mengen eines Diamins der Formel IIa

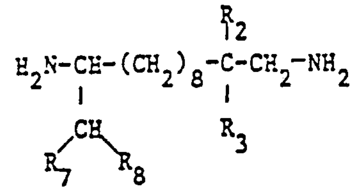

(IIa)

worin $R_2$, $R_3$, $R_7$ und $R_8$ je Methyl oder Aethyl bedeuten, und Terephthalsäure bzw. einem amidbildenden Derivat davon erhältlich sind, wobei der Anteil an Gemisch B) bei $R_2$, $R_3$, $R_7$ und $R_8$ gleich Methyl 60-75 Gewichtsprozent und bei $R_2$, $R_3$, $R_7$ und $R_8$ gleich Aethyl 50-65 Gewichtsprozent, bezogen auf das Gesamtgewicht der Reaktionskomponenten, beträgt.

Als amidbildende Derivate der Terephthalsäure oder Isophthalsäure können beispielsweise die entsprechenden Dihalogenide, vor allem die Dichloride, Dinitrile, Dialkyl- oder Diarylester, besonders Dialkylester mit je 1-4 C-Atomen in den Alkylteilen und Diphenylester, verwendet werden.

Die Umsetzung der definitionsgemässen Reaktionskomponenten kann nach an sich bekannten Methoden vorgenommen werden. Bevorzugt ist die Herstellung nach dem Schmelzpolykondensationsverfahren in mehreren Stufen. Dabei werden die Diamine mit den Dicarbonsäuren in einem abgeschlossenen Gefäss, gegebenenfalls unter Zusatz von Wasser, unter Inertgas bei Temperaturen zwischen etwa 240 und 290 °C vorkondensiert. Unter Umständen kann es zweckmässig sein, die Diamine und die Dicarbonsäuren als Salze einzusetzen. Die für die Vorkondensation einzusetzenden Salze können aus im wesentlichen stöchiometrischen Mengen Terephthalsäure bzw. Isophthalsäure und Diamin der Formel I, II bzw. III in geeigneten inerten organischen Lösungsmitteln hergestellt werden. Als inerte organische Lösungsmittel eignen sich dabei z. B. cycloaliphatische Alkohole, wie Cyclopentanol und Cyclohexanol, und vor allem aliphatische Alkohole mit bis zu 6 C-Atomen, wie Methanol, Aethanol, n-Propanol, Butanole, Pentanole und Hexanole, sowie Gemische derartiger Lösungsmittel mit Wasser. Das Vorkondensat kann anschliessend bei Temperaturen zwischen etwa 260 und 300 °C bei Normaldruck und in Inertgasatmosphäre bis zur Bildung der erfindungsgemässen Copolyamide weiterkondensiert werden. Unter Umständen kann es von Vorteil sein, nach Beendigung der Polykondensation Vakuum anzulegen, um das Copolyamid zu entgasen.

Die erfindungsgemässen Copolyamide können auch durch Schmelz- oder Lösungsmittelpolykondensation von Diaminen der Formel I, II oder III mit einem aktivierten Ester der Isophthalsäure, der Terephthalsäure oder Gemischen davon hergestellt werden. Als aktivierte Ester eignen sich vor allem die entsprechenden Diphenylester. Die Reaktionstemperaturen liegen dabei im allgemeinen zwischen etwa 230 und 300 °C.

Den erfindungsgemässen Copolyamiden können bei der Herstellung oder bei der Formgebung übliche Zusätze, wie Hitze- und Lichtstabilisatoren; Antioxidantien, Farbstoffe, Flammschutzmittel und dergleichen, zugesetzt werden. Um farblose Copolyamide zu erhalten, können den erfindungsgemässen Copolyamiden während der Herstellung 30-3 000 ppm $H_2PO_2$ bzw. Salze davon, wie z. B. Ammoniumhypophosphit, oder 15-1 000 ppm weisser $P_4$ unter gleichzeitigem Ueberschuss an Diamin im Reaktionsgemisch zugesetzt werden. (« ppm » steht für parts per million). Die Mengenangabe bezieht sich auf das Gesamtgewicht der Reaktionskomponenten.

Bevorzugt sind daher auch Copolyamide, welche durch Umsetzen eines Gemisches A) mit einem Gemisch B) oder C) erhältlich sind, wobei mindestens eines der Gemische A), B) und C) das Diamin in Ueberschuss enthält und die Umsetzung unter Zusatz von $H_3PO_2$ bzw. Salzen davon oder weissem $P_4$ erfolgt. Besonders bevorzugt sind Copolyamide der oben erwähnten Art, welche aus einer Umsetzung erhältlich sind, worin der Zusatz von $H_3PO_2$ bzw. Salzen davon 30-3 000 ppm oder von weissem $P_4$ 15-1 000 ppm, bezogen auf das Gesamtgewicht der Reaktionskomponenten beträgt.

Das Diamin der Formel I ist bekannt und kann nach an sich bekannten Methoden hergestellt werden. Die Diamine der Formeln II und III sowie deren Herstellung sind in der EP-A1-0 010 521 beschrieben.

Die erfindungsgemässen Copolyamide können nach an sich bekannten Methoden zu transparenten Formkörpern verschiedenster Art verarbeitet werden, wie transparenten Geräten oder Geräteteilen.

### Beispiel 1

Herstellung von Salzen aus Terephthalsäure oder Isophthalsäure und 1,11-Diaminoundecanen der Formel II oder III.

In einem Rundkolben, der mit Rührer, Rückflusskühler und Tropftrichter versehen ist, werden 0,1 Mol Terephthalsäure bzw. Isophthalsäure in 300 ml 70 %igem Aethanol zum Sieden erhitzt. In die kochende Suspension lässt man unter Rühren 0,1 Mol Diamin der Formel II oder III im Verlaufe von ca. 10 Minuten aus dem Tropftrichter einfliessen und spült darin haftende Diaminreste mit etwas Aethanol quantitativ in das Reaktionsgemisch. Die dabei entstandene klare Lösung lässt man unter ständigem Rühren erkalten, filtriert das dabei ausgefallene Salz ab und trocknet es im Vakuum bei 90 °C. Nach dieser Methode wurden die folgenden Salze hergestellt:

| Bezeichnung | Zusammensetzung |
|---|---|
| Salz A | 1-Isopropyl-10,10-dimethyl-1,11-diaminoundecan/TPS |
| Salz B | 1-Cyclohexyl-10-pentamethylen-1,11-diaminoundecan/IPS |
| Salz D | 1-Aethyl-10,10-dimethyl-1,11-diaminoundecan/TPS |
| Salz E | 1-(3-Pentyl)-10,10-diäthyl-1,11-diaminoundecan/TPS |
| Salz G | 1-Phenyl-10-äthyl-10-n-butyl-1,11-diaminoundecan/TPS |
| Salz H | 1-Phenyl-10-methyl-1,11-diaminoundecan/TPS |
| Salz J | 1-n-Hexyl-10,10-dimethyl-1,11-diaminoundecan/TPS |

TPS = Terephthalsäure
IPS = Isophthalsäure.

Beispiel 2

Herstellung eines Salzes aus Isophorondiamin und Terephthalsäure (Salz C).

In einem Rundkolben, der mit Rührer, Rückflusskühler und Tropfrichter versehen ist, werden 0,1 Mol Terephthalsäure in 300 ml 60 %igem Aethanol zum Sieden erhitzt. In die kochende Suspension lässt man unter Rühren 0,1 Mol Isophorondiamin im Verlaufe von ca. 10 Minuten aus dem Tropftrichter einfliessen und spült darin haftende Diaminreste mit etwas Aethanol quantitativ in das Reaktionsgemisch. Die dabei entstandene klare Lösung lässt man unter ständigem Rühren erkalten, filtriert das dabei ausgefallene Salz ab und trocknet es im Vakuum bei 90 °C. Ausbeute 75 % d. Th.

Beispiele 3-13

In ein Bombenrohr, welches mit einem Schraubdeckel mit eingebautem Ueberdruckventil ausgestattet ist, werden folgende Komponenten eingewogen:
a Gew.% Salz C und
(100-a) Gew.% Salz von Beispiel 1.
Das Gemisch wird unter Stickstoffatmosphäre im verschlossenen Bombenrohr eine Stunde lang in ein Heizbad, dessen Temperatur 270 °C beträgt, getaucht, wobei unter Wasserabspaltung allmählich eine klare Schmelze entsteht. Nach dem Abkühlen auf Raumtemperatur (20-25 °C) wird die erstarrte Schmelze dem Rohr entnommen und in einem Glaskolben unter Ausschluss von Luft und unter dauerndem Durchleiten von Stickstoff 5 Stunden bei 270 °C erhitzt. Das Kondensationswasser wird dabei laufend durch den Stickstoffstrom aus dem Reaktionsgefäss entfernt. Beim Abkühlen erstarrt das Copolyamid zu einer glasklaren Masse.

Je 2-3 g der hergestellten Copolyamide werden in einer beheizbaren hydraulischen Presse bei 270 °C zu einer Folie von ca. 0,4 bis 1 mm Dicke verpresst. Zur Bestimmung der Wasseraufnahme werden die Folien bei Raumtemperatur einer relativen Luftfeuchtigkeit von 65 % ausgesetzt, bis sich das Gleichgewicht eingestellt hat, das heisst, bis keine Gewichtszunahme mehr festgestellt werden kann. Je nach Foliendicke schwankt die dafür benötigte Zeit zwischen etwa 10 und 60 Tagen. In Tabelle 1 sind Zusammensetzung und Eigenschaften der Copolyamide angegeben.

Die reduzierte Viskosität $\eta_{red.} = (\eta rel.^{-1})/c$ basiert auf Messungen einer 0,5 %igen Lösung der Copolyamide in m-Kresol bei 25 °C. Die Glasumwandlungstemperaturen wurden im Differentialkalorimeter (DSC) gemessen. Bei den Werten für die Wasseraufnahme handelt es sich um Sättigungswerte bei Raumtemperatur. Die Beständigkeit der Transparenz gegenüber kochendem Wasser ist bei allen Copolyamiden sehr gut, das heisst, auch nach mehreren Tagen ist keine Beeinträchtigung der Transparenz feststellbar.

Tabelle 1

| Beispiel Nr. | Zusammensetzung Salz | Gew.% | $\eta$ red dl/g | Glasumwandlungstemperatur °C | Wasseraufnahme 65% rel. Luftfeucht. Gew.% |
|---|---|---|---|---|---|
| 3 | A<br>C | 60<br>40 | 1,01 | 181 | 2,3 |
| 4 | A<br>C | 65<br>35 | 1,05 | 174 | 2,1 |
| 5 | A<br>C | 70<br>30 | 1,07 | 168 | 1,9 |
| 6 | B<br>C | 67<br>33 | 1,02 | 173 | 2,0 |
| 7 | D<br>C | 70<br>30 | 1,57 | 163 | 2,0 |

(Fortsetzung)

| Beispiel Nr. | Zusammensetzung Salz | Gew.% | η red dl/g | Glasumwandlungstemperatur °C | Wasseraufnahme 65% rel. Luftfeucht. Gew.% |
|---|---|---|---|---|---|
| 8 | D<br>C | 62<br>38 | 1,22 | 173 | 2,4 |
| 9 | E<br>C | 66<br>34 | 0,76 | 160 | 1,6 |
| 10 | F<br>C | 71<br>29 | 0,67 | 173 | 0,95 |
| 11 | G<br>C | 62<br>38 | 0,93 | 160 | 1,9 |
| 12 | H<br>C | 70<br>30 | 0,98 | 162 | 1,8 |
| 13 | J<br>C | 60<br>40 | 0,96 | 161 | 2,1 |

Beispiele 14-23

Die folgenden Beispiele zeigen die Auswirkung von phosphorhaltigem Zusatz unter verschiedenen Mengenverhältnissen der Reaktionskomponenten.

Ein Gemisch von

20,0 mMol 1,11-Diamino-1-Diamino-1-isopropyl-10,10-dimethylundecan
10,2 mMol Isophorondiamin
30,2 mMol Terephthalsäure

und einem oder mehreren Zusätzen, die in der Tabelle 2 aufgeführt sind, wird in ein Bombenrohr eingewogen und unter Stickstoff verschlossen. Die Vorkondensation im verschlossenen Bombenrohr und die Polykondensation im offenen Gefäss unter Stickstoff wird unter den in Beispiel 3 beschriebenen Bedingungen durchgeführt. Die Ergebnisse sind in Tabelle 2 zusammengefasst.

(Siehe Tabelle 2 Seite 7 f.)

Tabelle 2

| Beispiel | Zusatz I [1] | Zusatz II [2] | $\eta$ red. dl/g | Aussehen | Endgruppen im Polyamid (mAeq./g) $NH_2$ | COOH |
|---|---|---|---|---|---|---|
| 14 | 1000 ppm $NH_4H_2PO_2$ | - | 1,07 | leicht gelb | 0,032 | 0,035 |
| 15 | " " " | 2 Mol% IPD [3] | 1,03 | farblos | 0,102 | 0,016 |
| 16 | " " " | 1 Mol% TPS [4] | 0,95 | gelb | 0,010 | 0,075 |
| 17 | 500 " " | 2 Mol% IPD | 1,34 | farblos | | |
| 18 | 250 " " | 2 Mol% IPD | 1,06 | farblos | | |
| 19 | 250 " $H_3PO_2$ | 2 Mol% IPD | 1,09 | farblos | 0,08 | 0,005 |
| 20 | " " " | - | 1,28 | gelblich | 0,012 | 0,040 |
| 21 | 80 " $P_4$ (weiss) | 2 Mol% IPD | 1,04 | farblos | 0,09 | 0,012 |
| 22 | - | 2 Mol% IPD | 1,15 | leicht gelb | 0,11 | 0,02 |
| 23 | - | - | 1,07 | gelb | 0,042 | 0,046 |

1) Mengenangabe in ppm bez. auf Gesamtkomponenten
2) Mengenangabe in Mol % bez. auf Terephthalsäure
3) IPD = Isophorondiamin
4) TPS = Terephthalsäure

**Patentansprüche**

1. Ein transparentes Copolyamid mit einer reduzierten spezifischen Viskosität von mindestens 0,5 dl/g, gemessen an einer 0,5 %-igen Lösung in m-Kresol bei 25 °C, das durch Umsetzung eines Gemisches A) aus einem Diamin der Formel I

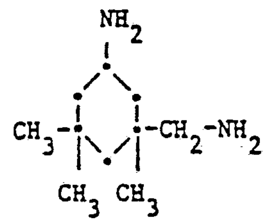

(I)

und Isophthalsäure oder Terephthalsäure bzw. Gemischen oder amidbildenden Derivaten davon entweder mit einem Gemisch B) aus einem aliphatischen Diamin der Formel II

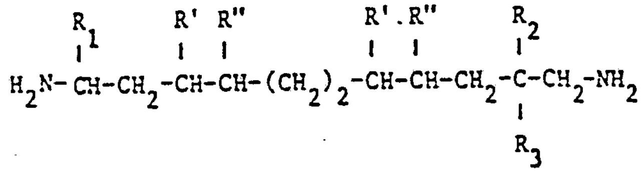

(II)

und Terephthalsäure bzw. einem amidbildenden Derivat davon oder einem Gemisch von Terephthalsäure und Isophthalsäure bzw. amidbildenden Derivaten davon in einem Molverhältnis Terephthalsäure(derivat) : Isophthalsäure(derivat) von 8 : 2 bis 10 : 0 oder mit einem Gemisch C) aus einem aliphatischen Diamin der Formel III

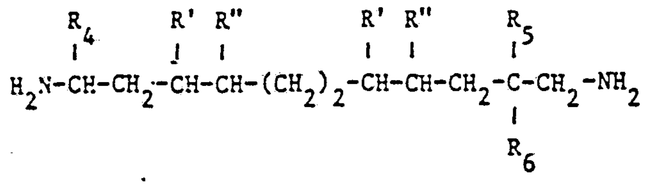

(III)

und Terephthalsäure oder Isophthalsäure bzw. Gemischen oder amidbildenden Derivaten davon erhältlich ist, wobei

R′ und R″ unabhängig voneinander Wasserstoff oder Methyl,

$R_1$ Alkyl mit 2-12 C-Atomen oder gegebenenfalls substituiertes Aryl,

$R_2$ Alkyl mit 1-8 C-Atomen,

$R_3$ Wasserstoff oder Alkyl mit 1-5 C-Atomen,

$R_4$ gegebenenfalls durch $C_{1-4}$-Alkyl substituiertes Cycloalkyl mit 5-12 Ring-C-Atomen,

$R_5$ Wasserstoff oder Methyl und

$R_6$ Methyl oder $R_5$ und $R_6$ zusammen Alkylen mit 4-11-C-Atomen bedeuten, und der Anteil an Gemisch C), bezogen auf das Gesamtgewicht der Reaktionskomponenten, 60-80 Gewichtsprozent und der Anteil an Gemisch B), bezogen auf das Gesamtgewicht der Reaktionskomponenten, 50-80 Gewichtsprozent betragen und sich diese Gewichtsprozente bei amidbildenden Derivaten der Isophthalsäure oder Terephthalsäure auf gleiche funktionelle Gruppen beziehen.

2. Ein transparentes Copolyamid nach Anspruch 1, dadurch gekennzeichnet, dass die Gemische A), B) und C) aus stöchiometrischen Mengen des Diamins und der Dicarbonsäure bzw. amidbildenden Derivaten davon bestehen.

3. Ein transparentes Copolyamid nach Anspruch 2, dadurch gekennzeichnet, dass es durch Umsetzen eines Gemisches A) mit einem Gemisch B) aus einem Diamin der Formel II und Terephthalsäure bzw. einem amidbildenden Derivat davon erhältlich ist, wobei R′ und R″ je Wasserstoff, $R_1$ Phenyl, geradkettiges Alkyl mit 2-6 C-Atomen oder —$CH(R_7)(R_8)$, $R_2$ und $R_8$ unabhängig voneinander Alkyl mit 1-6 C-Atomen und $R_3$ und $R_7$ unabhängig voneinander Alkyl mit 1-4 C-Atomen bedeuten und der Anteil an Gemisch B), bezogen auf das Gesamtgewicht der Reaktionskomponenten, 50-75 Gewichtsprozent beträgt.

4. Ein transparentes Copolyamid nach Anspruch 3, dadurch gekennzeichnet, dass $R_1$ —$CH(R_7)(R_8)$ und $R_2$ und $R_8$ bzw. $R_3$ und $R_7$ je Methyl, Aethyl, n-Propyl oder n-butyl bedeuten und der Anteil an Gemisch B), bezogen auf das Gesamtgewicht der Reaktionskomponenten, 55-75 Gewichtsprozent beträgt.

5. Ein transparentes Copolyamid nach Anspruch 3, dadurch gekennzeichnet, dass $R_1$ —$CH(R_7)(R_8)$ und $R_2$, $R_3$, $R_7$ und $R_8$ je Methyl bedeuten und der Anteil an Gemisch B), bezogen auf das Gesamtgewicht der Reaktionskomponenten, 70 Gewichtsprozent beträgt.

6. Ein transparentes Copolyamid nach Anspruch 2, dadurch gekennzeichnet, dass es durch Umsetzen eines Gemisches A) aus einem Diamin der Formel I und Terephthalsäure bzw. einem amidbildenden Derivat davon mit einem Gemisch C) aus einem Diamin der Formel III und Terephthalsäure bzw. einem amidbildenden Derivat davon erhältlich ist, worin R′ und R″ je Wasserstoff, $R_4$ Cycloalkyl mit 5-8 Ring-C-Atomen und $R_5$ und $R_6$ je Methyl oder zusammen Alkylen mit 4-7 C-Atomen bedeuten und der Anteil an Gemisch C), bezogen auf das Gesamtgewicht der Reaktionskomponenten, 65-75 Gewichtsprozent beträgt.

7. Ein transparentes Copolyamid nach Anspruch 6, dadurch gekennzeichnet, dass R′ und R″ je Wasserstoff, $R_4$ Cyclopentyl und $R_5$ und $R_6$ zusammen Tetramethylen oder $R_4$ Cyclohexyl und $R_5$ und $R_6$ zusammen Pentamethylen bedeuten.

8. Ein transparentes Copolyamid nach Anspruch 2, dadurch gekennzeichnet, dass es durch Umsetzen eines Gemisches A) aus einem Diamin der Formel I und Terephthalsäure oder einem amidbildenden Derivat davon mit einem Gemisch B) aus einem Diamin der Formel IIa

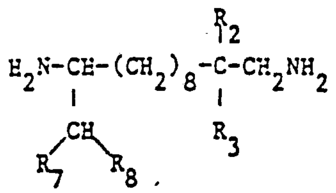
(IIa)

worin $R_2$, $R_3$, $R_7$ und $R_8$ je Methyl oder Aethyl bedeuten, und Terephthalsäure oder einem amidbildenden Derivat davon erhältlich ist, wobei der Anteil an Gemisch B) bei $R_2$, $R_3$, $R_7$ und $R_8$ gleich Methyl 60-75 Gewichtsprozent und bei $R_2$, $R_3$, $R_7$ und $R_8$ gleich Aethyl 50-65 Gewichtsprozent, bezogen auf das Gesamtgewicht der Reaktionskomponenten, beträgt.

9. Ein transparentes Copolyamid nach Anspruch 1, dadurch gekennzeichnet, dass es durch Umsetzen eines Gemisches A) mit einem Gemisch B) oder C) erhältlich ist, wobei mindestens eines der Gemische A), B) und C) das Diamin in Ueberschuss enthält und die Umsetzung unter Zusatz von $H_3PO_2$ bzw. Salzen davon oder weissem $P_4$ erfolgt.

10. Ein transparentes Copolyamid nach Anspruch 8, dadurch gekennzeichnet, dass es aus einer Umsetzung erhältlich ist, die unter Zusatz von 30-3 000 ppm $H_3PO_2$ bzw. Salzen davon oder 15-1 000 ppm weissem $P_4$, bezogen auf das Gesamtgewicht der Reaktionskomponenten, erfolgt.

11. Verwendung eines Copolyamids nach Anspruch 1 zur Herstellung von Formkörpern.

**Claims**

1. A transparent copolyamide having a reduced specific viscosity of at least 0.5 dl/g, measured in a 0.5 % solution in m-cresol at 25 °C, which copolyamide is obtainable by reacting a mixture A) of a diamine of the formula I

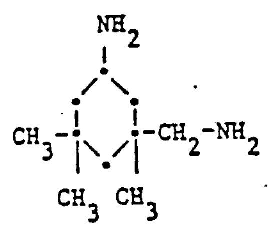
(I)

and isophthalic acid or terephthalic acid or mixtures or amide-forming derivatives thereof either with a mixture B) of an aliphatic diamine of the formula II

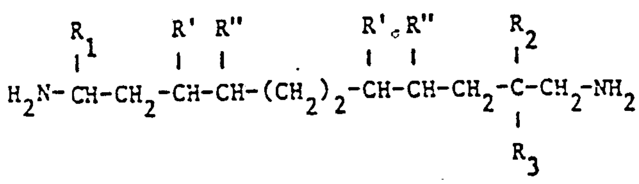
(II)

and terephthalic acid or an amide-forming derivative thereof or a mixture of terephthalic acid and isophthalic acid or amide-forming derivatives thereof in a molar ratio of terephthalic acid (or derivative) : isophthalic acid (or derivative) of 8 : 2 to 10 : 0 or with a mixture C) of an aliphatic diamine of the formula III

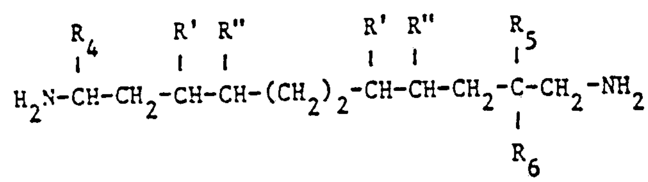
(III)

and terephthalic acid or isophthalic acid or mixtures or amide-forming derivatives thereof, in which formula II and III each of

R′ and R″ independently of the other is hydrogen or methyl,

$R_1$ is alkyl having 2-12 carbon atoms or is unsubstituted or substituted aryl,

$R_2$ is alkyl having 1-8 carbon atoms,

$R_3$ is hydrogen or alkyl having 1-5 carbon atoms,

$R_4$ is cycloalkyl having 5-12 ring carbon atoms which is unsubstituted or substitued by $C_1$-$C_4$ alkyl,

$R_5$ is hydrogen or methyl and

$R_6$ is methyl or

$R_5$ and $R_6$ together are alkylene having 4-11 carbon atoms, the proportion of mixture C) being 60-80 per cent by weight and the proportion of mixture B) being 50-80 per cent by weight, based on the total weight of the reactants, and these percentages by weight relating, in the case of amide-forming derivatives of isophthalic acid or terephthalic acid, to identical functional groups.

2. A transparent copolyamide according to claim 1, wherein mixtures A), B) and C) consist of stoichiometric amounts of the diamine and the dicarboxylic acid or amide-forming derivatives.

3. A transparent copolyamide according to claim 2, which is obtainable by reacting a mixture A) with a mixture B) of a diamine of the formula II and terephthalic acid or an amide-forming derivative thereof, in which formula II each or R′ and R″ is hydrogen, $R_1$ is phenyl, straight chain alkyl having 2-6 carbon atoms or —$CH(R_7)$ $(R_8)$, each of $R_2$ and $R_8$ independently of the other is alkyl having 1-6 carbon atoms and each of $R_3$ and $R_7$ independently of the other is alkyl having 1-4 carbon atoms, the proportion of mxiture B) being 50-75 per cent by weight, based on the total weight of the reactants.

4. A transparent copolyamide according to claim 3, wherein $R_1$ is —$CH(R_7)$ $(R_8)$ and $R_2$ and $R_8$, and $R_3$ and $R_7$, are each methyl, ethyl, n-propyl or n-butyl, the proportion of mixture B) being 55-75 per cent by weight, based on the total weight of the reactants..

5. A transparent copolyamide according to claim 3, wherein $R_1$ is —$CH(R_7)$ $(R_8)$ and $R_2$, $R_3$, $R_7$ and $R_8$ are each methyl, the proportion of mixture B) being 70 per cent by weight, based on the total weight of the reactants.

6. A transparent copolyamide according to claim 2, which is obtainable by reacting a mixture A) of a diamine of the formula I and terephthalic acid or an amide-forming derivative thereof with a mixture C) of a diamine of the formula III and terephthalic acid or an amide-forming derivative thereof, in which formula III each of R′ and R″ is hydrogen, $R_4$ is cycloalkyl having 5-8 ring carbon atoms and $R_5$ and $R_6$ are each methyl or together are alkylene having 4-7 carbon atoms, the proportion of mixture C) being 65-75 per cent by weight, based on the total weight of the reactants.

7. A transparent copolyamide according to claim 6, in which each of R′ and R″ is hydrogen, $R_4$ is cyclopentyl and $R_5$ and $R_6$ together are tetramethylene or $R_4$ is cyclohexyl and $R_5$ and $R_6$ together are pentamethylene.

8. A transparent copolyamide according to claim 2, which is obtainable by reacting a mixture A) of a diamine of the formula I and terephthalic acid or an amide-forming derivative thereof with a mixture B) of a diamine of the formula IIa

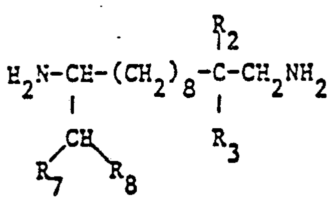

(IIa)

wherein each of $R_2$, $R_3$, $R_7$ and $R_8$ is methyl or ethyl, and terephthalic acid or an amide-forming derivative thereof, the proportion of mixture B) being 60-75 per cent by weight if $R_2$, $R_3$, $R_7$ and $R_8$ are methyl, and 50-65 per cent by weight if $R_2$, $R_3$, $R_7$ and $R_8$ are ethyl, the percentage in each case being based on the total weight of the reactants.

9. A transparent copolyamide according to claim 1, which is obtainable by reacting a mixture A) with a mixture B) or C), with the proviso that at least one of the mixtures A), B) and C) contains the diamine in excess, and with the proviso that the reaction is carried out in the presence of $H_3PO_2$ or salts thereof or white $P_4$.

10. A transparent copolyamide according to claim 8, which is obtainable by a reaction with addition of 30-3,000 ppm of $H_3PO_2$ or salts thereof or 15-1,000 ppm of white $P_4$, in each case based on the total weight of the reactants.

11. Use of a copolyamide according to claim 1 for the production of mouldings.

**Revendications**

1. Copolyamide transparent ayant une viscosité spécifique réduite d'au moins 0,5 dl/g, mesurée à

25 °C sur une solution à 0,5 % dans le m-crésol, copolyamide que l'on peut obtenir en faisant réagir un mélange A) constitué d'une diamine de formule I

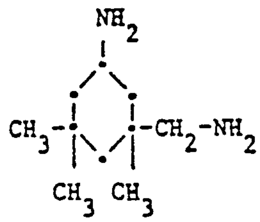

(I)

et d'acide isophtalique ou d'acide téréphtalique ou de mélanges de ceux-ci ou encore de dérivés amidogènes de ces acides, soit avec un mélange B) constitué d'une diamine aliphatique de formule II

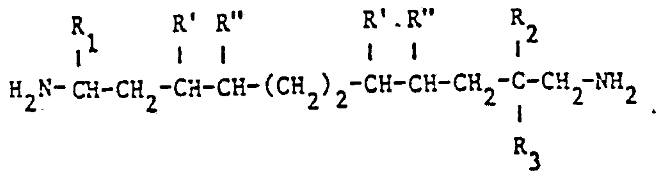

(II)

et d'acide téréphtalique ou d'un dérivé amidogène de celui-ci ou d'un mélange d'acide téréphtalique et d'acide isophtalique ou de dérivés amidogènes de ces acides, dans un rapport molaire de l'acide téréphtalique (ou de son dérivé) à l'acide isophtalique (ou à son dérivé) compris entre 8 : 2 et 10 : 0, soit avec un mélange C) constitué d'une diamine aliphatique de formulle III

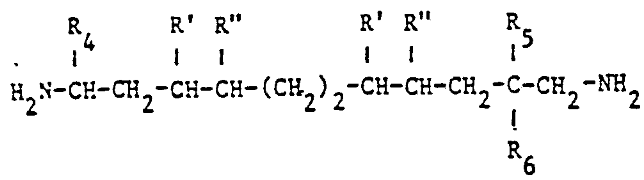

(III)

et d'acide téréphtalique ou d'acide isophtalique ou de mélanges de ceux-ci ou de dérivés amidogènes de ces acides, les divers symboles présents dans ces formules ayant les significations indiquées ci-dessous

R' et R" représentent chacun, indépendamment l'un de l'autre, l'hydrogène ou un méthyle.

$R_1$ représente un alkyle contenant de 2 à 12 atomes de carbone ou un aryle éventuellement substitué,

$R_2$ représente un alkyle contenant de 1 à 8 atomes de carbone,

$R_3$ représente l'hydrogène ou un alkyle contenant de 1 à 5 atomes de carbone,

$R_4$ représente un cycloalkyle dont le noyau contient de 5 à 12 atomes de carbone et qui porte éventuellement un alkyle en $C_1$-$C_4$,

$R_5$ représente l'hydrogène ou un méthyle et

$R_6$ représente un méthyle, ou encore

$R_5$ et $R_6$ forment ensemble un alkylène contenant de 4 à 11 atomes de carbone, la proportion du mélange C) étant de 60 à 80 % en poids et celle du mélange B) de 50 à 80 % en poids par rapport au poids total des composantes réactionnelles, ces pourcentages pondéraux, dans le cas de dérivés amidogènes de l'acide isophtalique ou de l'acide téréphtalique, étant relatifs à des radicaux fonctionnels identiques.

2. Copolyamide transparent selon la revendication 1, caractérisé en ce que les mélanges A), B) et C) sont constitués de quantités stœchiométriques de la diamine et de l'acide dicarboxylique ou de dérivés amidogènes de ces acides.

3. Copolyamide transparent selon la revendication 2, caractérisé en ce qu'on peut l'obtenir par réaction d'un mélange A) avec un mélange B) constitué d'une diamine de formule II et d'acide téréphtalique ou d'un dérivé amidogène de celui-ci, les symboles R' et R" représentant chacun l'hydrogène, $R_1$ représentant un phényle, un alkyle linéaire contenant de 2 à 6 atomes de carbone ou un radical —CH($R_7$) ($R_8$), $R_2$ et $R_8$ représentant chacun, indépendamment l'un de l'autre, un alkyle contenant de 1 à 6 atomes de carbone, et $R_3$ et $R_7$ représentant chacun, indépendamment l'un de l'autre, un alkyle contenant de 1 à 4 atomes de carbone, et la proportion du mélange B), par rapport au poids total des composantes réactionnelles, étant comprise entre 50 et 75 % en poids.

4. Copolyamide transparent selon la revendication 3, caractérisé en ce que R représente un radical —CH($R_7$) ($R_8$) tandis que $R_2$ et $R_8$, ou $R_3$ et $R_7$, représentent chacun un radical méthyle, éthyle, n-propyle ou n-butyle, et la proportion du mélange B), par rapport au poids total des composantes réactionnelles, étant comprise entre 55 et 75 % en poids.

5. Copolyamide transparent selon la revendication 3, caractérisé en ce que $R_1$ représente un radical —CH($R_7$) ($R_8$) tandis que $R_2$, $R_3$, $R_7$ et $R_8$ représentent chacun un radical méthyle, et la proportion du mélange B), par rapport au poids total des composantes réactionnelles, étant de 70 % en poids.

6. Copolyamide transparent selon la revendication 2, caractérisé en ce qu'on peut l'obtenir en faisant réagir un mélange A) constitué d'une diamine de formule I et d'acide téréphtalique, ou d'un dérivé amidogène de celui-ci, avec un mélange C) constitué d'une diamine de formule III et d'acide téréphtalique, ou d'un dérivé amidogène de celui-ci, les symboles R' et R" représentant chacun un atome d'hydrogène, $R_4$ représentant un cycloalkyle dont le noyau renferme de 5 à 8 atomes de carbone, tandis que $R_5$ et $R_6$ représentent chacun un méthyle ou forment ensemble un alkylène contenant de 4 à 7 atomes de carbone, et la proportion du mélange C), par rapport au poids total des composantes réactionnelles, étant comprise entre 65 et 75 % en poids.

7. Copolyamide transparent selon la revendication 6, caractérisé en ce que R' et R" représentent chacun l'hydrogène, $R_4$ représente un cyclopentyle et $R_5$ et $R_6$ forment ensemble un tétraméthylène, ou encore $R_4$ représente un cyclohexyle et $R_5$ et $R_6$ forment ensemble un pentaméthylène.

8. Copolyamide transparent selon la revendication 2, caractérisé en ce qu'on peut l'obtenir en faisant réagir un mélange A) constitué d'une diamine de formule I et d'acide téréphtalique, ou d'un dérivé amidogène de celui-ci, avec un mélange B) constitué d'une diamine de formule IIa

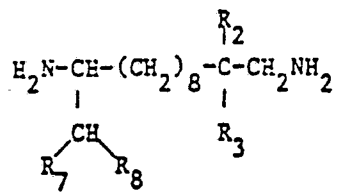

(IIa)

dans laquelle $R_2$, $R_3$, $R_7$ et $R_8$ représentent chacun un méthyle ou un éthyle, et d'acide téréphtalique ou d'un dérivé amidogène de celui-ci, la proportion du mélange B) étant de 60 à 75 % en poids lorsque $R_2$, $R_3$, $R_7$ et $R_8$ représentent chacun un méthyle, et de 50 à 65 % en poids lorsque $R_2$, $R_3$, $R_7$ et $R_8$ représentent chacun un éthyle, ces pourcentages étant rapportés au poids total des composantes réactionnelles.

9. Copolyamide transparent selon la revendication 1, caractérisé en ce qu'il peut être obtenu par réaction du mélange A) avec un mélange B) ou C) dont l'un au moins contient la diamine en excès, cette réaction étant effectuée en présence d'$H_3PO_2$ ou de sels de celui-ci ou en présence de $P_4$ blanc.

10. Copolyamide transparent selon la revendication 8, caractérisé en ce qu'il peut être obtenu par une réaction effectuée en présence de 30 à 3 000 ppm d'$H_3PO_2$ ou de sels de celui-ci ou en présence de 15 à 1 000 ppm de $P_4$ blanc, par rapport au poids total des composantes réactionnelles.

11. Application d'un copolyamide selon la revendication 1 pour la fabrication d'objets moulés.